# EUROPÄISCHE PATENTSCHRIFT

(11) **EP 0 513 669 B1**
(45) Veröffentlichungstag und Bekanntmachung des Hinweises auf die Patenterteilung: **08.11.1995**
(21) Anmeldenummer: 92107734.3
(22) Anmeldetag: 07.05.1992
(51) Int. Cl.: B23K 20/12, F01D 5/30

(54) **Reibschweissverfahren zur Beschaufelung eines Schaufelträgers für Strömungsmaschinen**
Friction welding method for fixing blades on a turbine wheel of a fluid machine
Méthode de soudage par friction pour la fixation des aubes sur une roue à aubes d'une machine à fluide

(30) Priorität: 17.05.1991 GB 9110697; 17.05.1991 GB 9110704; 17.05.1991 GB 9110705; 17.05.1991 GB 9110706
(43) Veröffentlichungstag der Anmeldung: 19.11.1992
(73) Patentinhaber: MTU MOTOREN- UND TURBINEN-UNION MÜNCHEN GMBH, D-80976 München (DE)
(72) Erfinder: Searle, John Gilbert, Staffordshire WS12 5LL (GB); Stoll, Walter H., W-8919 Utting (DE)

(56) Entgegenhaltungen:
- EP-A- 0 290 134
- EP-A- 0 404 531
- EP-A- 0 458 630
- WO-A-90/13388

## Beschreibung

Die Erfindung betrifft ein Verfahren zur Beschaufelung eines rotationssymmetrischen Schaufelträgers für Strömungsmaschinen mittels Reibschweißen, wobei am Umfang des Schaufelträgers mehrere ebene Schweißflächen vorgesehen sind, welche jeweils mit einer ebenen Schweißfläche einer Schaufel verschweißt werden und die zum Verbinden der Körper notwendige Schweißtemperatur durch Zusammenpressen der Schweißfläche der Schaufel mit der Schweißfläche des Schaufelträgers mittels einer Stauchkraft und durch gleichzeitige translatorische Pendelbewegung der Schweißfläche der Schaufel gegenüber der Schweißfläche des Schaufelträgers erfolgt. Sie betrifft ferner die Verwendung einer Schaufel oder eines Schaufelrohlings zur Ausführung des Verfahrens, eine Aufnahmeeinrichtung für Reibschweißgeräte zur Beschaufelung von Schaufelträgern mit zwei axial gegeneinander verspannbaren Spannbacken zur Fixierung einer Schaufel oder eines Schaufelrohlings sowie eine Vorrichtung zur Durchführung eines Reibschweißverfahrens, bei welchen ebene Schweißflächen zweier zu verbindender Körper mittels einer Stauchkraft senkrecht zur Ebene der aneinanderliegenden Schweißflächen aneinander gedrückt werden und ein erster Körper zur Erzeugung von Reibungswärme in den Schweißflächen gegenüber dem anderen Körper geradlinig, oszillierend bewegbar ist, wobei die Bwegung senkrecht zur Richtung der Stauchkraft erfolgt.

Beim Reibschweißen verursacht die wärmeerzeugende Bewegung starke Seitenkräfte, die über die Schweißfläche der Schaufel auf die Schaufel aufgebracht werden und kontinuierlich oder zyklisch ihre Richtung ändern, je nach Art der Relativbewegung zwischen Schaufel und Körper. Die Seitenkräfte werden natürlich gleichgültig davon aufgebracht, ob die Schaufel selbst die wärmeerzeugende Bewegung ausführt oder selbst dabei stillsteht. Um unerwünschte seitliche Bewegungen der Schaufel verhüten zu können, müssen seitliche Einspannkräfte auf sie aufgebracht werden.

In dem Dokument WO-A-9013388 ist ein Reibschweißverfahren offenbart, bei dem die wärmeerzeugende Pendelbewegung im wesentlichen in Richtung der Sehnenachse der zu verschweißenden Schaufel erfolgt. Dadurch ist das benutzte Verfahren nur dann für unterschiedlich beschaufelte Scheiben verwendbar, wenn entsprechender Aufwand für die Anpassung bzw. Einstellung der Reibschweißmaschine in Kauf genommen wird. Vor allen Dingen bei unterschiedlichen Keilwinkeln zwischen Schaufelträger und Schaufel werden solche Anpassungsmaßnahmen notwendig.

Hiervon ausgehend ist es Aufgabe der Erfindung, ein gattungsgemäßes Verfahren zu nennen, mit welchem Schaufelträger unterschiedlichster Durchmesser, Kegel- und Schaufelwinkel bei geringem Verstellaufwand des Reibschweißgerätes beschaufelt werden können. Weiterhin soll eine für dieses Verfahren verwendbare Schaufel oder ein Schaufelrohling angegeben werden, auf welche die beim Verschweißen auftretenden Kräfte ohne die Gefahr unerwünschter Verformung oder Beschädigung der Schaufel übertragen werden können.

Mittels einer Aufnahmeeinrichtung für Reibschweißgeräte zur Beschaufelung von Schaufelträgern, wie z.B. Scheiben oder Trommeln soll eine exakte Plazierung der anzuschweißenden Schaufel gewährleistet werden.

Schließlich ist eine Vorrichtung zur Durchführung von Reibschweißverfahren anzugeben, mit welchem Körper verschiedenster Abmessungen passgenau und unter Vermeidung zeitraubender Einstellvorgänge miteinander verschweißt werden können.

Erfindungsgemäß wird die Aufgabe bezüglich des Verfahrens dadurch gelöst, daß die Pendelbewegung in einer Richtung erfolgt, die in einer im wesentlichen senkrecht zur Achse des Schaufelträgers erstreckenden Ebene liegt.

Das erfindungsgemäße Verfahren hat den Vorteil, daß die Richtung in der die wärmeerzeugende Bewegung stattfindet, unabhängig vom Schaufel- und Keilwinkel erfolgt. Demnach wird die Anzahl der Einstellungen verringert, die beim Einstellen des Reibschweißgerätes zur Herstellung, Instandsetzung oder Wiederherstellung eines beschaufelten Produktes unterschiedlicher Abmessungen erforderlich sind. Insbesondere ist dies bei der Herstellung ganzer beschaufelter Rotoren von Strömungsmaschinen vorteilhaft, da hier im allgemeinen jede einzelne Stufe eigene geometrische Abmessungen wie Schaufelwinkel und Kegelwinkel aufweist. Hierdurch ergibt sich eine beträchtliche Zeitersparnis.

Ein weiterer Vorteil der vorliegenden Erfindung ergibt sich aus nachstehenden Überlegungen heraus. Zu diesem Zweck wird angenommen, daß bei der reibungsbedingten Erzeugung von Wärme die Schaufel hin- und herbewegt wird, während der Schaufelträger stillsteht.

Jedoch trifft eine annähernd gleiche Erwägung zu, wenn die Schaufel stillsteht während der Körper eine Pendelbewegung ausführt. Wie oben ausgeführt werden der Pendelbewegung der Schaufel starke Kräfte entgegengesetzt. Daher muß die Schaufel fest an das sie hin- und herbewegende Element gesichert werden. Der Widerstand tritt gleichmäßig über der Schweißfläche der Schaufel auf, und dabei ist es wünschenswert, die Schaufel mittels eines Halters zu fixieren, der sich um die Schaufel herum erstreckt. Die Schaufeln eines fertigen Produktes liegen gewöhnlich eng beeinander und demnach verbleibt relativ wenig Raum zwischen benachbarten Schaufeln, durch den ein Halter sich erstrecken kann. Da die Hauptkomponenten der vom Halter übertragenen Kraft in Richtung der Pendelbewegung liegen, ist es wünschenswert, die Form des Halters derart zu gestalten, daß dessen Teile, soweit sie sich in Richtung der Pendelbewegung erstrecken und die Hauptkomponenten der Druck- und Zugkräfte übertragen, nach Möglichkeit eine geradlinige Ausbildung und angemessene Dicke aufweisen. Man kann sich jedoch vorstellen, daß die Erfüllung solcher Wunschvorstellungen oft schwierig ist, wenn die Pendelbewegung in Längsrichtung der Schweißfläche erfolgt und die Übertragung jener Hauptkraftkomponenten durch Teile des Halters erfolgt, die sich zwischen benachbarten Schaufeln erstrecken. Bei Anwendung der vorliegenden Erfindung werden die besagten Hauptkraftkomponenten jedoch durch Teile des Halters übertragen, die seitlich der Schaufelbaugruppe liegen, wo der Raum weniger beengt ist.

Weitere vorteilhafte Ausbildungen der Erfindung bezüglich des Verfahrens ergeben sich aus den Ansprüchen 2 bis 5.

Zur Lösung der im Zusammenhang mit der Verwendung einer Schaufel bzw. eines Schaufelrohlings gestellten Aufgabe, ist vorgesehen, daß der Schaufelfuß an seinem vom Schaufelblatt abgewandten Ende die Schweißfläche und eine Auflagefläche aufweist, wobei die Auflagefläche von der Schweißfläche abgewandt ist.

Die Ausbildung der Schaufel bzw. des Schaufelträgers bei der erfindungsgemäßen Verwendung insbesondere des Schaufelfußes erlaubt die Übertragung hoher Kräfte, wie sie beim Reibschweißen erforderlich sind ohne dabei eine Beschädigung der Schaufel zu riskieren. Die unmittelbare Übertragung der Stauchkraft über die der Schweißfläche nahegelegenen Auflagefläche gestattet eine exakte Positionierung der Schaufel am Schaufelträger. Verformungen im Schaufelfuß können durch die extrem kurzen Wege des Kraftflusses im Schaufelfuß weitgehend ausgeschlossen werden. In einer bevorzugten Weiterbildung des Schaufelfußes mit vier ebenen Seitenflächen, über welche die hohen Spannkräfte auf eine große Fläche verteilt werden können wird, eine positionsgenaue Führung der Schaufel erzielt.

Aufgabe der Aufnahmeeinrichtung ist es, Schaufeln für die Beschaufelung eines Schaufelträgers mittels Reibschweißverfahren mit dem Reibschweißgerät zu koppeln, wobei die Aufnahmeeinrichtung derart auszubilden ist, daß ein Rattern, d. h. Relativbewegung zwischen Schaufel und Aufnahmeeinrichtung, ausgeschlossen ist, welche eine Fehlplazierung oder eine Beschädigung der Schaufel verursachen könnte.

Erfindungsgemäß wird die Aufgabe von einer Aufnahmeeinrichtung gelöst, bei der zwei axial gegeneinander verspannbare Spannbacken zur Fixierung einer Schaufel vorgesehen sind, die jeweils zwei im Winkel zueinander stehende Spannflächen aufweist, welche schräg zur Spannachse Q der Spannbacken stehen, wobei die Spannbacken jeweils mit einer Auflagefläche versehen sind, welche sich senkrecht zu den anschließenden Spannflächen erstrecken und bei eingespannter Schaufel mit Auflagefläche des Schaufelfußes zur Anlage kommen.

Zwar ist aus der EP-A-458 630 (die Stand der Technik gemäß Art. 54(3) EPÜ ist) eine Aufnahmeeinrichtung mit zwei axial gegeneinander verspannbaren Spannbacken zur Führung einer Schaufel bekannt,bei der die Spannbacken jeweils zwei im Winkel zueinanderstehende Spannflächen aufweisen, welche schräg zur Spannachse der Spannbacken stehen und bei der die Schaufel zwischen den Spannbacken durch Aufliegen der Spannflächen auf entsprechenden Seitenflächen des Schaufelfußes einspannbar ist. Jedoch ist mit der bekannten Aufnahmeeinrichtung eine genaue Führung der Schaufel beim Reibschweißen nicht möglich. Insbesondere ist die Größe der Spannfläche bei der bekannten Aufnahmeeinrichtung begrenzt, was bei den hohen beim Reibschweißen auftretenden Stauchkräften von Nachteil ist.

Die erfindungsgemäße Ausgestaltung der Aufnahmeeinrichtung erlaubt eine Einspannung der Schaufel über ihre diagonal gegenüberliegenden Ecken bzw. Kanten des Schaufelfußes wodurch nicht nur eine kraftschlüssige sondern auch eine formschlüssige Einspannung der Schaufel zwischen den Spannbacken erfolgt. Hierdurch ist eine genaue Führung der Schaufel beim Reibschweißen möglich. Zu dem kann somit der Schaufelfuß über seinen gesamten Umfang, d.h. über eine große Spannfläche eingespannt werden, wodurch hohe Kräfte, welche für die Führung der Schaufel und für den Reibschweißvorgang wünschenswert sind, aufgebracht werden können. Hierbei ist zu berücksichtigen, daß beim Reibschweißen die Stauchkraft gut mehrere Tonnen und darüber betragen kann. Für die Stauchkraft sind 70 bis 150 Kilonewton eine typische Größenordnung. Wird einmal unterstellt, daß bei der reibungsbedingten Erzeugung von Wärme der maximale Reibungskoeffizient zwischen den Schweißflächen annähernd 1 beträgt, so entsprechen die maximalen Seitenkräfte in der Größe ungefahr der Stauchkraft, ändern aber in für Reibungsschweißen typischer Weise kontinuierlich oder periodisch ihre Richtung.

Der Anspruch 9 gibt eine vorteilhafte Weiterbildung der Erfindung bezüglich der Aufnahmeeinrichtung wieder.

Schließlich ist es Aufgabe der vorliegenden Erfindung, eine gattungsgemäße Vorrichtung zur Durchführung eines Reibschweißverfahrens zu benennen. Diese soll geeignet sein, Körper miteinander paßgenau zu verschweißen, wobei Einstellvorgänge zur Anpassung an verschiedene Körpervarianten auf das Notwendige reduziert werden sollen.

Erfindungsgemäß wird die Aufgabe durch eine Vorrichtung gemäß dem Anspruch 10 gelöst.

Die erfindungsgemäße Zuordnung der Spann- und Aufnahmeeinrichtung bzw. der Schweißflächen der Körper einerseits und der Hubrichtung und der schwenkbaren Staucheinrichtung andererseits, vermeidet zeitraubende Einstellvorgänge und ermöglicht zu dem eine zielgenaue Plazierung der Körper zueinander. Besonders vorteilhaft erweist sich die Vorrichtung beim Verschweißen von Schaufeln mit einem Schaufelträger für Strömungsmaschinen, da auch bei unterschiedlichen Schaufelwinkeln und Kegelwinkeln beispielsweise von Verdichter- oder Turbinenrotoren von Stufe zu Stufe nur die Staucheinrichtung entsprechend geschwenkt werden muß. Hierdurch können Fertigungszeiten erheblich verkürzt werden.

Weitere vorteilhafte Ausbildungen der Erfindung zur Reibschweißvorrichtung ergeben sich aus den übrigen abhängigen Unteransprüchen.

Bevorzugte Ausführungsformen der Erfindung werden nachfolgend unter Bezugnahme auf die beigefügten Zeichnungen erläutert: Es zeigt:
- Fig. 1: eine Teilansicht des abgewickelten Umfangs einer Rotorscheibe für Strömungsmaschinen mit ihren Schweißflächen,
- Fig. 2: eine Ansicht der beschaufelten Scheibe gemäß Schnitt II-II,
- Fig. 3: eine Ansicht der kegelabschnittförmigen Scheibe gemäß Schnitt III-III,
- Fig. 4: die Schaufel eines Laufrades für Strömungsmaschinen in Seitenansicht,
- Fig. 5: eine Seitenansicht einer Aufnahmeeinrichtung mit in Schweißlage eingespannter Schaufel,
- Fig. 6: einen Schnitt VI-VI gem. Fig. 7 der Aufnahmeeinrichtung mit einer an die Scheibe angesetzten Schaufel und ihren benachbarten Schaufeln,
- Fig. 7: eine Ansicht gemäß Schnitt VII-VII, Fig. 5 der Aufnahmeeinrichtung mit zwischen zwei Spannbacken geklemmter Schaufel,

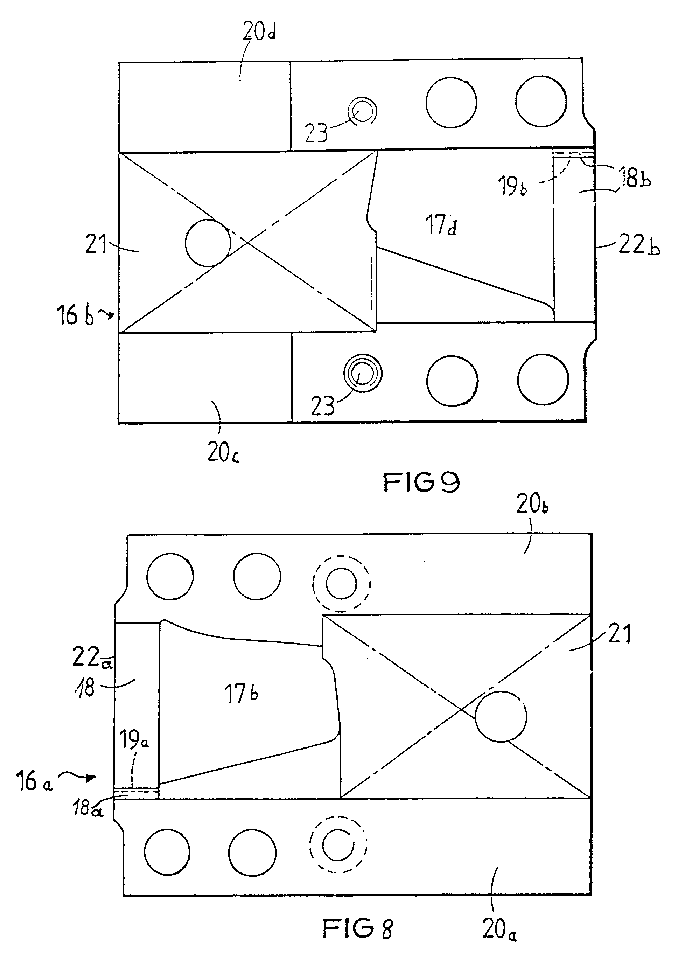

- Fig. 8: eine Seitenansicht der ersten Spannbacke,
- Fig. 9: eine Seitenansicht der zweiten Spannbacke,
- Fig. 10: eine Seitenansicht der Vorrichtung zum Reibschweißen mit gestrichelt eingezeichneter Staucheinrichtung,
- Fig. 11: eine Frontansicht der Vorrichtung mit quer dazu angeordneter Hubeinrichtung,

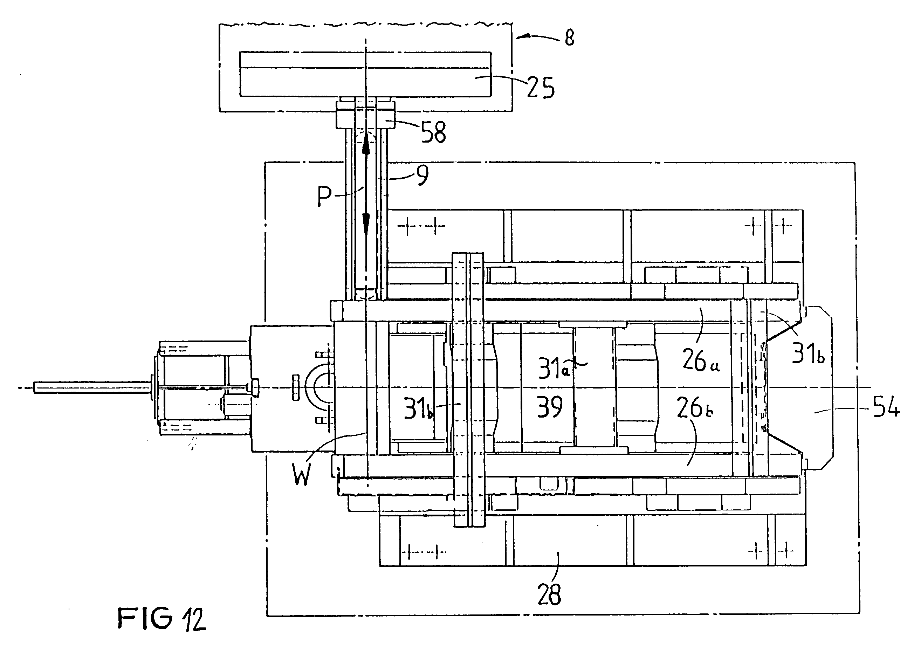

- Fig. 12: eine Draufsicht der Vorrichtung,
- Fig. 13: eine teilweise geschnittene Ansicht des Verbindungselements zwischen Hubeinrichtung und Aufnahmeeinrichtung,
- Fig. 14: eine Frontansicht der Staucheinrichtung,
- Fig. 15: eine Draufsicht der Staucheinrichtung,
- Fig. 16: einen Querschnitt der Staucheinrichtung gemäß Schnitt XV-XV in Fig. 15.

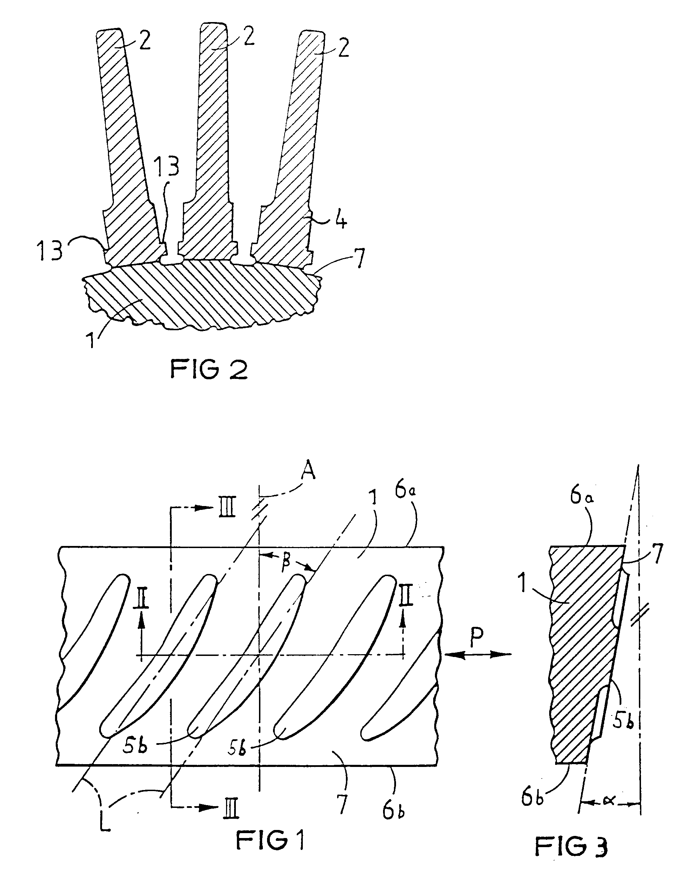

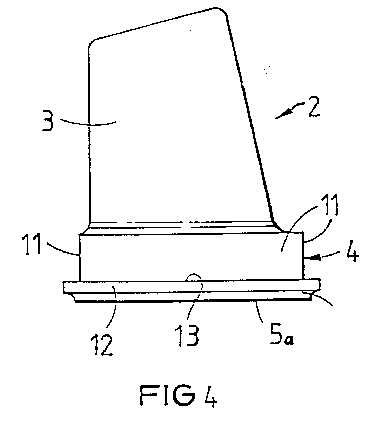

Die Fig. 1 bis 3 beziehen sich auf die Beschaufelung eines Laufrades für Strömungsmaschinen. Das Laufrad besteht aus einem als Scheibe 1 ausgebildeten Schaufelträger 1' an das eine Mehrzahl von gleichen Schaufeln 2 reibgeschweißt ist. Die Scheibe 1 und die Schaufeln 2 sind aus Titan gefertigt. Nachdem die Schaufeln bzw. die Schaufelrohlinge an die Scheibe reibgeschweißt sind, werden sie einer Fertigbearbeitung unterworfen, bei der Werkstoff abgetragen wird, um den Schaufeln 2 die endgültige Form zu geben. In der Anwendung der vorliegenden Erfindung können Schaufeln 2 höchst verschiedener Formen verwendet werden. Eine Schaufel 2 mit repräsentativer Form ist in der Figur 4 gezeigt. Die Schaufel 2 besteht aus einem Schaufelblatt 3 und einem Schaufelfuß 4, der in einer ebenen Schweißfläche 5a ausläuft. Im Querschnitt ist das Schaufelblatt 3 relativ lang und schmal und weist eine etwas bogenförmige Form auf, wobei eine Hauptfläche des Blattes konkav und die andere Hauptfläche konvex ist - ein typisches Schaufelprofil. Die Schweißfläche 5a, weist im Grundriß eine dem Schaufelprofil ähnliche Form auf. Der Schaufelfuß 4 schließt an seinem dem Schaufelblatt abgewandten Ende mit einem quaderförmigen Teil ab durch welches beim Reibschweißen Pendel-, Einspann- und Stauchkräfte auf die Schaufel 2 aufgebracht werden. Die Scheibe 1 weist ebene, zueinander parallel liegende Stirnflächen 6a und 6b auf. Die Außenkanten der Stirnflächen 6a und 6b weisen einen kreisförmigen Grundriß auf. Die Scheibe hat eine Achse die sich senkrecht zu den Stirnflächen 6a und 6b erstreckt. Eine Umfangsfläche erstreckt sich zwischen den Außenkanten der Stirnflächen 6a und 6b.

An der Umfangsfläche 7 ist eine Mehrzahl leicht vorstehender Stege ausgebildet. Jeder Steg wird zu einer ebenen Schweißfläche 5b bearbeitet, deren Form der Schweißfläche 5a der Schaufel 2 entspricht. Wie in Figur 1 gezeigt ist die Längsachse L jeder Schweißfläche um den Schaufelwinkel β gegenüber einer zur Achse parallelen Geraden geneigt, die durch die Schweißfläche verläuft. Die Längsachse L einer Schweißfläche entspricht im wesentlichen der projizierten Sehnenlinie des Schaufelwurzelprofils.

In der Praxis sind die meisten Scheiben so geformt, daß die Umfangsflächen eine eher kegelabschnittförmige als zylindrische Gestalt aufweisen. Teil einer Scheibe 1 dieser Art ist in Fig. 3 gezeigt, wobei die Scheibe eine Umfangsfläche 7 hat, die eine kegelstumpfförmige Gestalt mit einem Kegelwinkel α aufweist.

Wie bereits erwähnt kann die beim Reibschweißen einer Schaufel 2 an eine Scheibe 1 aufgebrachte Stauchkraft viele Kilonewton betragen. Die zur Hin- und Herbewegung der Schaufel erforderliche Hubeinrichtung 8 muß eine Kraft vergleichbarer Größe aufbringen können. Eine geeignete Hubeinrichtung 8 ist in GB-A- 2,199,783 von Allwood, Searle & Timney (Holdings) Limited beschrieben und abgebildet. Eine solche Hubeinrichtung 8 ist gewöhnlich relativ schwer und groß und dauerhaft an einem festen Ort montiert. Die Hubeinrichtung 8 weist ein Verbindungselement 9 auf, das sich entlang eines geradlinigen Weges in einer gleichbleibenden Richtung hin- und herbewegt. Daher muß die Scheibe 1 in einer solchen Lage befestigt werden, daß wenn eine Schaufel 2 an eine bestimmte Schweißfläche 5b angeschweißt werden soll, diese Schweißfläche 5b in einer Ebene E liegt, die parallel zur Richtung P der Pendelbewegung des Verbindungselements 9 verläuft. Die betroffene Schweißfläche 5 befindet sich dann in der sog. Schweißlage.

Wenn eine Schaufel 2 angeschweißt ist, muß die Scheibe 1 natürlich um ihre Achse A gedreht werden, um ihre nächste Schweißfläche 5b in die Schweißlage zu bringen. Dabei würde die die Scheibe 1 abstützende Vorrichtung gewöhnlich so ausgelegt werden, daß die besagte Verdrehung relativ leicht und schnell bewerkstelligt werden kann.

Beim Reibschweißen gemäß Ansprüche 1 bis 5 wird die Scheibe 1 derart in der Vorrichtung angebracht, daß die Richtung P der Pendelbewegung in einer Ebene E liegt, die senkrecht zur Achse A der Scheibe 1 steht. In dem in Figur 1 gezeigten Beispiel verläuft die Richtung P der Pendelbewegung daher parallel zu den Stirnflächen 6a,b. In Fig. 3 verläuft die Richtung P der Pendelbewegung jeweils senkrecht zur Ebene der Abbildung, wenn eine Schaufel 2 an die Schweißfläche 5b angeschweiß werden soll. Gleichzeitig geht aus Fig. 1 hervor, daß die Ausrichtung der Scheibe in der Vorrichtung insgesamt nicht vom Schaufelwinkel β beeinflußt wird. Aus Figur 3 geht desweiteren hervor, daß eine Veränderung im Kegelwinkel α nicht zwangsläufig auch eine Veränderung in der Gesamtausrichtung der Scheibe 1 gegenüber dem zur Hin- und Herbewegung der Schaufel 2 verwendeten Hubeinrichtung erforderlich macht.

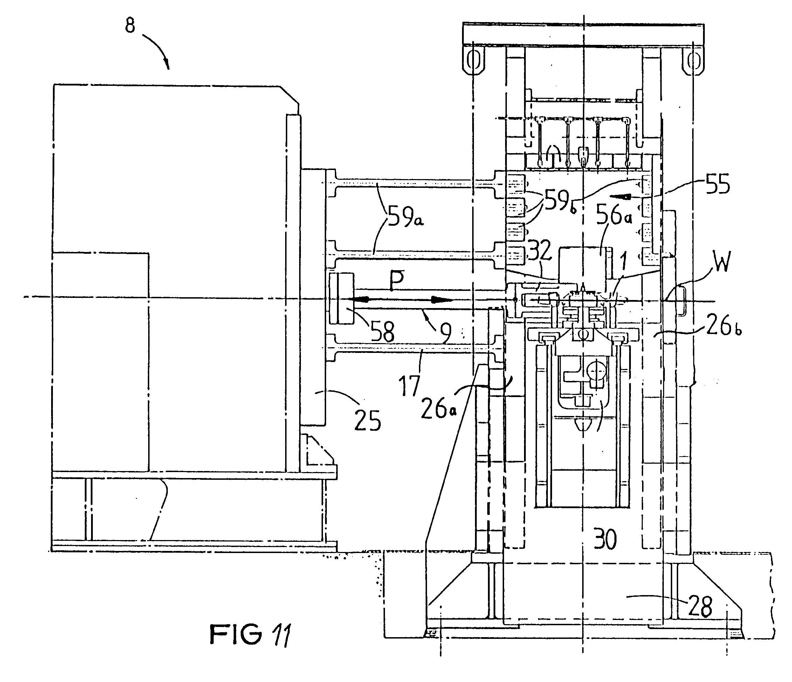

Ein weiterer Vorteil ergibt sich im Zusammenhang mit dem die Schaufel 2 tragenden, am Verbindungselement 9 befestigten Aufnahmeeinrichtung 10 (siehe Fig. 11). Damit die Schaufel 2 in ihrer Lage genau fixiert wird, verläuft die Aufnahmeeinrichtung 10 vorzugsweise um den ganzen quaderförmigen Teil der Schaufel 2 herum. Wie aus Figur 2 mit drei benachbarten Schaufeln 2 hervorgeht, bleibt zwischen den Schaufeln 2 sehr wenig Platz für die Aufnahmeeinrichtung 10, besonders nicht beim Anschweißen der letzten Schaufel an eine Scheibe 1.

Bei Anwendung der vorliegenden Erfindung werden die Hauptkomponenten der Pendelkraft über Teile der Aufnahmeeinrichtung 10 übertragen, die sich parallel zur Richtung P der Pendelbewegung erstrecken und so angeordnet sind, daß sie über die den Stirnflächen 6a,b zugewandten Seitenflächen hinausreichen. Diese Teile können daher jegliche erforderliche Breite sowie eine geradlinige Form aufweisen, damit sie die Kräfte besser auf die Schaufel 2 übertragen.

Das quaderförmige Ende des Schaufelfußes 4 weist vier rechteckige Seitenflächen 11 auf, die im rechten Winkel zueinander angeordnet sind (siehe Fig. 4), die senkrecht zur Ebene der Schweißfläche 5a stehen. Jede dieser Seitenflächen 11 ist eben gearbeitet. Im schweißflächenseitigen Anschluß des quaderförmigen Endes des Schaufelfußes 4 ist ein flanschartiger Absatz 12 mit einer Auflagefläche 13 angeformt, wobei sich die Auflagefläche 13 parallel zur Schweißfläche 5a des Schaufelfußes 4 und von dieser abgewandt erstreckt. Die Auflagefläche 13 ist eben bearbeitet.

Die in Fig. 4 abgebildete Schaufel 2 stellt eine von mehreren nach den Ansprüchen 6 bis 12 ausgebildete Schaufel dar, die nacheinander an eine Scheibe 1 zu einem Laufrad reibgeschweißt werden. Die Scheibe 1 besteht ebenfalls aus einer Titanlegierung. Am Umfang der Scheibe 1 ist eine Mehrzahl ebener Schweißflächen 5b regelmäßig beabstandet ausgebildet. Die Schweißflächen 5b an der Scheibe 1 sind so angeordnet, daß senkrecht zu den Flächen und durch die Mittelpunkte der Flächen verlaufende gedachte Linien auf einem gedachten flachen Kegel liegen, der sich konzentrisch zur Scheibe erstreckt.

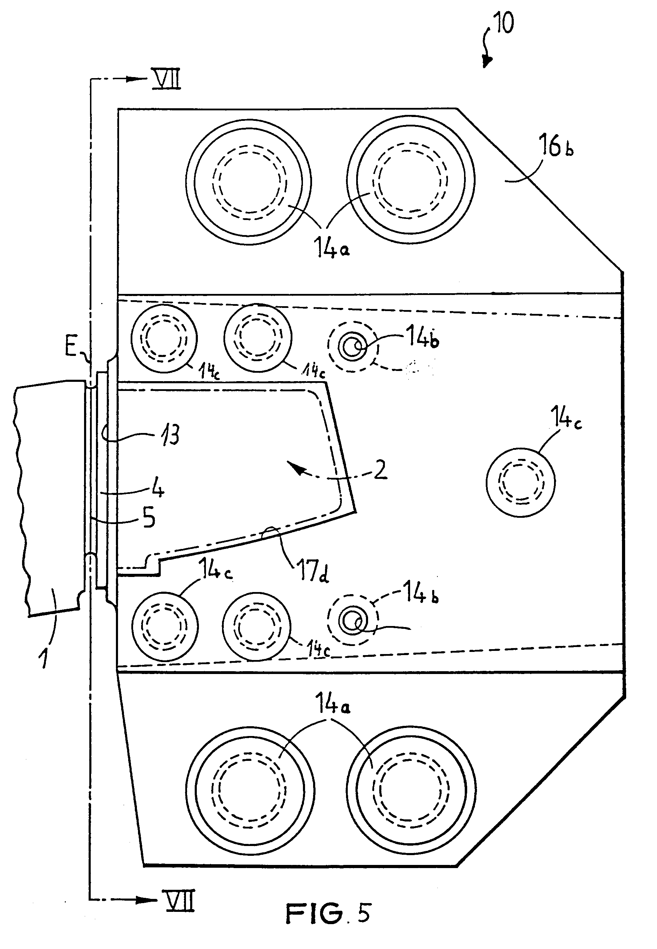

Beim Reibschweißen einer Schaufel 2 an eine Scheibe 1 wird die Schweißfläche 5a der Schaufel in Berührung mit der zugehörigen Schweißfläche 5b der Scheibe 1 entsprechend Figur 5 gebracht und eine Stauchkraft senkrecht zu den Schweißflächen 5a,b auf die Schaufel 2 aufgebracht, wobei die typische Stauchkraft zwischen 70 und 150 KN beträgt. Gleichzeitig wird die Schaufel 2 gegenüber der Scheibe 1 schnell hin- und herbewegt, wodurch Reibungswärme erzeugt wird. Um die Pendelbewegung aufnehmen zu können, wird die Stauchkraft von einem örtlich festen Hydraulikzylinder über ein oder mehrere biegsame Metallelemente übertragen. Ist ausreichend Wärme erzeugt, wird die Pendelbewegung ausgesetzt und die Stauchkraft weiterhin aufgebracht, bis die Schaufel 2 mit der Scheibe 1 verbunden ist. Dann wird die Scheibe 1 freigegeben und in eine Lage gedreht, in der eine weitere Schaufel 2 angeschweißt werden kann. Da bei jedem Schweißvorgang örtlich Wärme relativ hoher Temperatur erzeugt wird, bleibt der Scheibenbereich, in dem gerade eine Schaufel 2 angeschweißt wurde, nach der Durchführung der Schweißung noch relativ lange heiß. Das daraus in der Scheibe resultierende Temperaturgefälle verursacht vorübergehenden Wärmeverzug der Scheibe 1. Wird eine Schaufel 2 an einen derart vorübergehend verzogenen Scheibenbereich geschweißt, kann Fehlpassung der Schaufel 2 auftreten. Um dieses Problem ganz oder zumindest teilweise zu beseitigen, könnte man die Scheibe zwischen den einzelnen Schweißvorgängen abkühlen lassen. Das aber würde die Fertigstellung des beschaufelten Produktes über Gebühr verzögern. Daher wird ein festgelegtes Schweißmuster vorgezogen, bei dem die Schaufeln 2 jeweils an einer Stelle an die Scheibe 1 geschweißt werden, die relativ weit von den zuletzt durchgeführten Schweißungen liegt. Diese Abfolge wird wiederholt, bis Schaufeln 2 an alle Schweißstellen der Scheibe geschweißt sind. Die Schaufeln bzw. Schaufelrohlinge werden dann einem Formgebungsverfahren unterzogen, bei dem von jeder Schaufel Metall abgenommen wird, um genau die gewünschte Schaufelform zu erzielen. Das Formgebungsverfahren kann auch elektrochemische Bearbeitung einschließen.

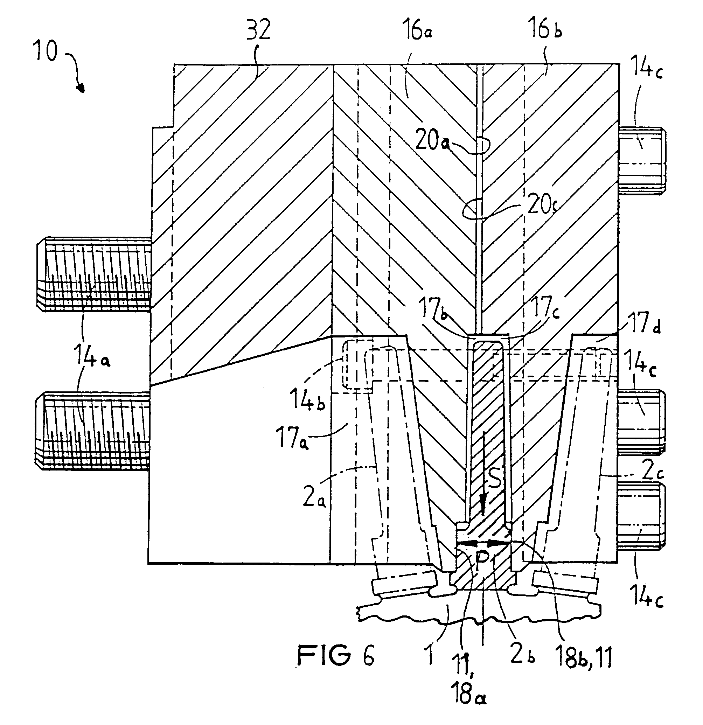

In Figur 6 ist die Lage von drei benachbarten Schaufeln 2a,b,c gezeigt, obwohl diese Bauteile wie oben erklärt normalerweise nicht unmittelbar nacheinander an die Scheibe geschweißt würden. Die Schaufel 2b wird demnächst an die Scheibe 1 geschweißt.

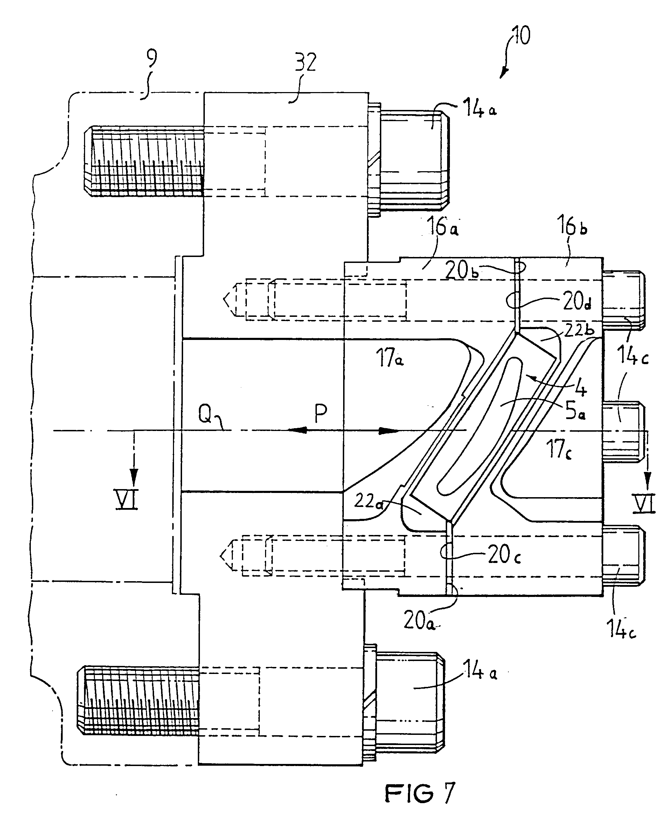

Ein Ende des mit der Hubeinrichtung 8 verbundenen Verbindungselements 9 ist in Fig. 7 angedeutet. Mittels Schrauben 14, die hohe Spannung aufbringen können, ist eine Gabel 32 am Ende des Verbindungselements 9 angebracht. Wie schon oben erklärt entspricht der der Pendelbewegung entgegengesetzte Reibungswiderstand ungefähr der Stauchkraft. Demnach werden die Schrauben 14a auf ein bestimmtes Drehmoment angezogen, um Rattern zwischen der Gabel 32 und dem Verbindungselement 9 zu verhüten.

An der Gabel 32 ist die Aufnahmeeinrichtung 10 angebracht, die die an die Scheibe 1 zu schweißende Schaufel 2 aufnimmt. Die Aufnahmeeinrichtung 10 besteht aus einer ersten Spannbacke 16a und einer zweiten Spannbacke 16b, zwischen denen die Schaufel 2 eingespannt wird.

Die Spannbacke 16a besteht aus einem Metallblock, der beiderseits mit einer offenen Aussparung 17 ausgebildet ist (siehe Fig. 6,7 u. 8). Die Aussparung 17a auf der einen Seite nimmt die vorhergehend an die Scheibe 1 geschweißt Schaufel 2a auf und die Aussparung 17b auf der anderen Seite nimmt die demnächst an die Scheibe 1 zu schweißende Schaufel 2b auf. Die Aussparung 17a ist so ausgebildet, daß sie um die Schaufel 2a herum einen Freiraum selbst dann bereitstellt, wenn die Aufnahmeeinrichtung 10 Pendelbewegung ausführt, während ein innerer Teil der Aussparung 17b so ausgebildet ist, daß er einen Freiraum um das Schaufelblatt 3 der Schaufel 2b herum bereitstellt. Ein äußerer Teil der Aussparung 17b ist so ausgebildet, daß er ein paar Spannflächen 18a,b bereitstellt, die eben geschliffen sind und rechtwinklig zueinander stehen. Aus nachstehend erklärten Gründen treffen die Flächen an einer ausgerundeten Nut 19a zusammen.

Die zweite Spannbacke 16b (siehe Fig. 6,7 u.9) der Aufnahmeeinrichtung 10 entspricht der Form nach allgemein der ersten Spannbacke 16a und besteht aus einem Metallblock, der an einer Seite mit einer Aussparung 17c entsprechend der Aussparung 17a zur Aufnahme der Schaufel 2c ausgebildet ist, sowie auf der anderen Seite mit einer Aussparung 17d entsprechend der Aussparung 17b zur Aufnahme der Schaufel 2b. Wie bei der Aussparung 17b ist ein innerer Teil der Aussparung 17d so ausgebildet, daß er einen Freiraum um das Schaufelblatt herum bereitstellt, während ein äußerer Teil der Aussparung 17d so ausgebildet ist, daß er Spannflächen 18c,d entsprechend den Flächen 18a,b bereitstellt, die an einer ausgerundeten Nut 19b zusammentreffen.

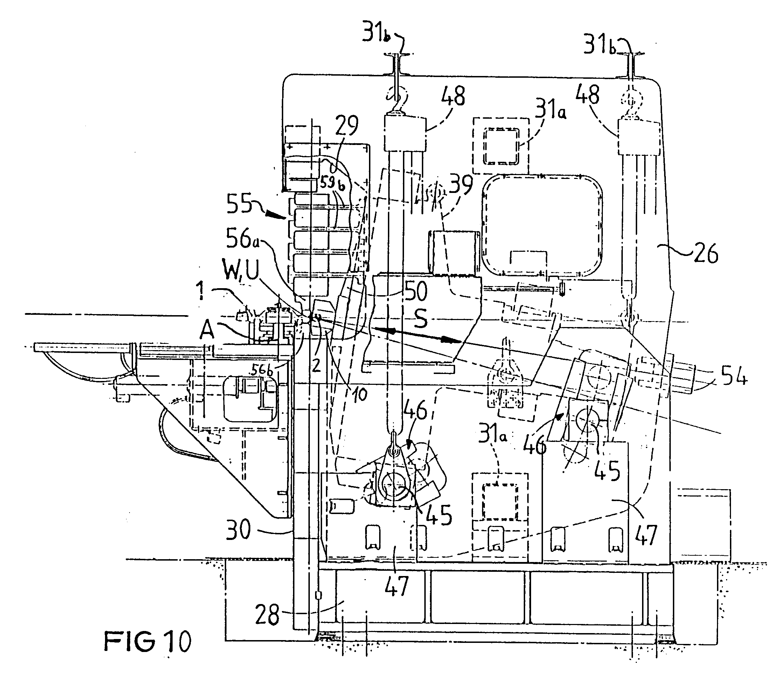

Wie aus Figur 7 und 9 hervorgeht ist die der zweiten Spannbacke 16b benachbarte Seite der ersten Spannbacke 16a mit parallel verlaufenden Kontaktflächen 20a,b ausgebildet. Zwischen ihnen liegt eine Schrägfläche 21. Wie aus Figur 7 und 9 hervorgeht ist die korrespondierende Seite der zweiten Spannbacke 16b mit anzupassenden Kontaktflächen 20c,d ausgebildet.

Die Flächen 22a,b stellen Auflageflächen der Spannbacken 16a und 16b dar.

Zum Schweißbetrieb werden die beiden Spannbacken 16a und 16b der Aufnahmeeinrichtung 10 mit einer dazwischenliegenden Schaufel 2 zusammengesetzt. Die Schaufel 2 wird dabei so ausgerichtet, daß ihre Auflagefläche 13 an den Auflageflächen 22a und 22b der Aufnahmeeinrichtung 10 anliegen, während die Seitenflächen 11 des Schaufelfußes 4 an den Spannflächen 18 anliegen. Die beiden Spannbacken 16 der Aufnahmeeinrichtung werden mittels eines Paars Schrauben 14b (Figur 5) zusammengehalten, wobei die Gewindeenden der Schrauben 14b in die Gewindebohrungen 23 in der zweiten Spannbacke 16b eingreifen, während ihre Schäfte und Köpfe in Senkungen 24 in der ersten Spannbacke 16a angeordnet sind. Beim Anziehen der Schrauben 14b klemmen die Spannflächen 18 den Schaufelfuß 4 zwischen sich ein.

Die zusammengesetzte Aufnahmeeinrichtung 10 wird dann an der Gabel 32 durch fünf hohe Vorspannungen aufbringende Schrauben 14c angebracht, die sich fluchtende Bohrungen in den beiden Spannbacken 16 erstrecken und in zugehörige Gewindebohrungen der Gabel 32 eingreifen. Um Rattern in Betrieb zu vermeiden, wird auf jede der Schrauben 14c ein bestimmtes Drehmoment aufgebracht. Die Nute 19a, b stellen sicher, daß aus der Klemmung resultierende Spannungen sich zwischen den Spannflächen 18 nicht so stark aufbauen, daß diese Teile für örtliche Rißbildung anfällig werden.
Die in den Fig. 10 dargestellte, nach den Ansprüchen 18 bis 30 ausgebildete Vorrichtung dient zur Verwendung beim Reibschweißen von Schaufeln 2 an eine Scheibe 1 zur Herstellung eines in Gasturbinen verwendeten Schaufelkranzes. Jeder nachfolgende Schweißvorgang findet an der gleichen Stelle statt, d.h. die Scheibe wird nach dem Anschweißen einer Schaufel 2 teilweise gedreht. In Figur 10 und 11 ist eine typische Scheibe 1 sichtbar.

Soll eine Schaufel 2 an die Scheibe 1 reibgeschweißt werden, wird die Scheibe 1 fest mit vertikal ausgerichteter Achse wie unten näher beschrieben eingespannt und die Schaufel 2 in eine Lage gebracht, in der ihre Schweißfläche 5a an einer der Schweißfläche 5b an der Scheibe 1 anliegt, die nachstehend als wirksame Schweißstelle bezeichnet wird. Die Schweißflächen 5 werden dann in einem vorbestimmten, in der Ebene E liegenden Punkt U fixiert, der selbst dann unverändert bleibt, wenn das Gerät wie nachstehend beschrieben verstellt wird. Auf die Schaufel 2 wird eine Stauchkraft im rechten Winkel zu den Schweißflächen 5 aufgebracht und drückt die Schaufel 2 gegen die Scheibe 1. Gleichzeitig wird die Schaufel 2 dazu gebracht, wärmeerzeugende Bewegung in der Form einer schnellen Pendelbewegung in horizontaler Richtung P derart auszuführen, daß die Schweißflächen 5 während der Bewegung in engem Kontakt miteinander bleiben. Wenn ausreichend Wärme zum Schweißen bereisteht, wird die Amplitude der wärmeerzeugenden Bewegung schnell auf Null reduziert und wird die Stauchkraft erhöht.

Die wärmeerzeugende Bewegung wird von der Hubeinrichtung 8 erzeugt, welches Gerät fest am Boden verankert ist. Die Hubeinrichtung 8 weist ein Antriebselement auf, das in Betrieb eine horizontal gerichtete oszillierende, rein sinusförmige Bewegung ausführt. Die Hubeinrichtung 8 schließt auch einen Mechanismus ein, mit dem die Amplitude der Hubbewegung schnell von ihren wärmeerzeugenden Wert - gewöhnlich 2-3 mm (entsprechend einem Vollausschlag von 4 bzw. 6 mm) - auf Null reduziert werden kann. An der Hubeinrichtung 8 ist eine vertikale Platte 25 befestigt, die eine mittige Öffnung aufweist, durch die ein Ende des Antriebselementes zugänglich ist. Zwischen Platte 25 und einer vertikalen Gehäusewand 26a ist ein Zuganker 17 angeschlossen, der zum Gerät gehört. Die Gehäusewand 26a stellt eine von zwei gleichen parallel zueinander angeordneten Gehäusewänden 26a und 25b dar, die an einem Maschinensockel 28 der Vorrichtung angebracht sind, der fest am Boden befestigt ist. Die beiden Gehäusewände 26a,b bilden das Gehäuse der Vorrichtung.

Obere Teile der Vorderkanten der Gehäusewand 26a,b und Spanneinrichtung sind abgetrennt, um nach vorn offene Öffnungen 29 zu bilden die ungefähr die Form eines C annehmen. Unterhalb der Öffnungen 29 sind die Gehäusewände 26a,b durch vertikale Bleche 30 oberhalb der Öffnungen 29 durch Querträger 31a miteinander verbunden.

Beim Reibschweißen wird die an die Scheibe 1 zu schweißende Schaufel 2 fest von der vorbeschriebenen Aufnahmeeinrichtung 10 gehalten.

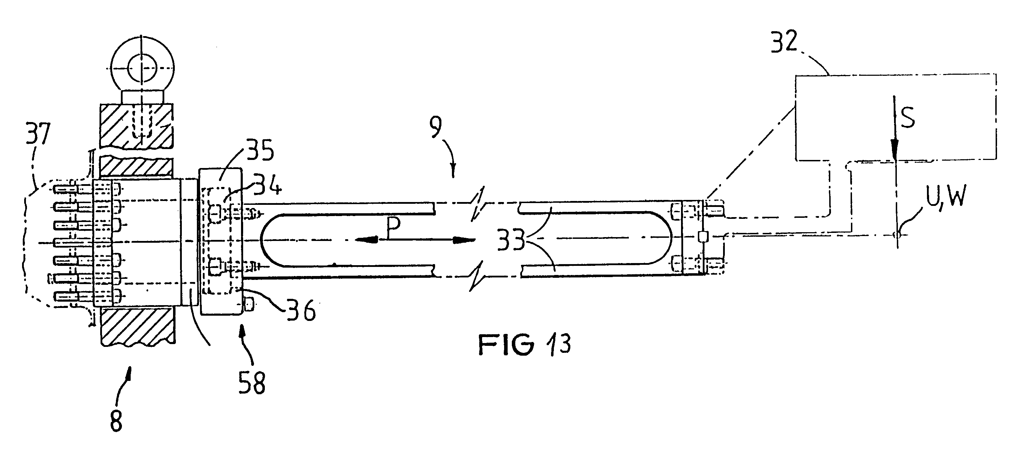

Die Aufnahmeeinrichtung 10 ist an einer Gabel 32 lösbar befestigt und so angebracht, daß sie sowohl Hub- als auch Stauchbewegung durchführen kann. Zu diesem Zweck ist die Gabel 32 mit einem Ende eines biegsamen Verbindungselements 9 verschraubt, das aus biegsamen, federnden Stahl in Form einer Vierkantstange mit einem mittigen Langloch mit gerundeten Enden gefertigt ist, so daß ein Paar beabstandeter, parallel angeordneter Blätter 33 gebildet wird (siehe Fig. 13). Das andere Ende des Verbindungselementes 9 ist mit einem kreisrunden Beschlag 34 verschraubt, der in einem Spannring 35 untergebracht ist, der an einem Ende mit einem nach innen weisenden Flansch 36 versehen ist. Der Ring 35 ist mittels Schrauben mit einem Anschlußstück 37 verschraubt, das seinerseits mit einem äußeren Ende des Antriebselementes der Hubeinrichtung 8 verschraubt ist. Der Beschlag 34, der Spannring 35, der Flansch 36 und das Anschlußstück 37 bilden somit eine Kupplung 58, mit welcher sich die Ausrichtung des Verbindungselements 9 bezüglich seiner Biegerichtung entsprechend der Scheibengeometrie einstellen läßt.

Im Betrieb wird die Pendelbewegung des äußeren Endes des Antriebselements durch das Anschlußstück 37 auf das biegsame Verbindungselement 9 und von dort auf die Gabel 32 übertragen. Gleichzeitig wird die Stauchbewegung der Gabel 32 durch federnde Durchbiegung der Blätter 33 aufgenommen. Ist die Herstellung eines ersten Schaufelkranzes beendet, wird unter Umständen gewünscht, einen zweiten Schaufelkranz mit einer neuen Scheibe von, im Vergleich mit der vorangegangenen Scheibe unterschiedlicher Größe und Form herzustellen. Solche Unterschiede können meistens einfach dadurch berücksichtigt werden, daß die neue Scheibe zwischen in der Fixiereinrichtung 38 der Vorrichtung so positioniert wird, daß der Mittelpunkt der Schweißfläche 5a der neuen Scheibe, an die eine Schaufel zu schweißen ist, im gleichen Punkt U festgelegt wird, in dem der Mittelpunkt der Schweißfläche der vorangegangenen Scheibe gelegen war.

Es kann jedoch auch vorkommen, daß sich der Kegelwinkel α der neuen Scheibe von dem der vorangegangenen Scheibe unterscheidet. Dann muß die Winkellage der Gabel 32 so abgewandelt werden, daß - wie weiter unten näher beschrieben - die Stauchkraft wieder senkrecht zu den Schweißflächen 5 aufgebracht werden kann. Die Winkellage der Gabel 32 kann dadurch verändert werden, daß die Schrauben gelockert werden und das biegsame Verbindungselement 9 um seine Längsachse gedreht wird, womit sich der Beschlag 34 im Spannring 35 dreht, wonach die Schrauben wieder angezogen werden. Wie aus Figur 13 hervorgeht liegt der Punkt U (der den Mittelpunkt der Schweißung darstellt) auf der Längsachse des biegsamen Verbindungselements das seinerseits koaxial zum Beschlag 34 verläuft. Daher bleibt beim Verstellen der Winkellage des biegsamen Verbindungselements 9, wie oben beschrieben der Punkt U unverändert.

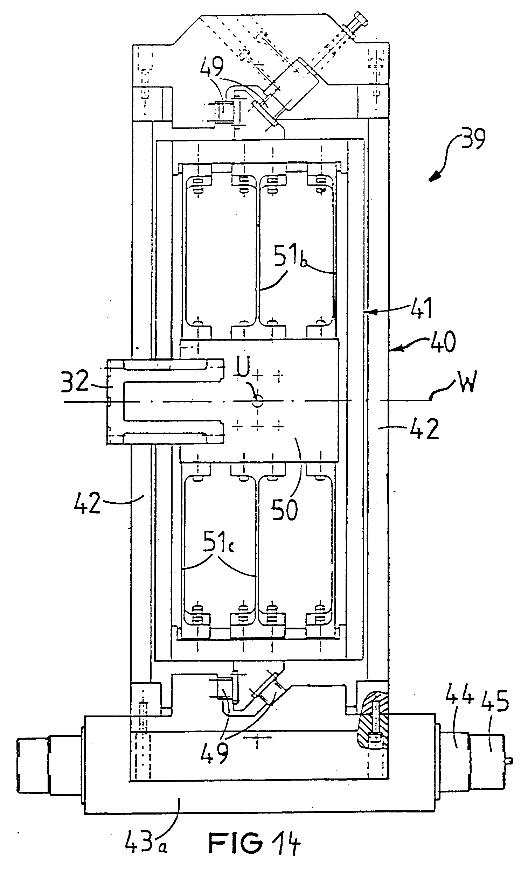

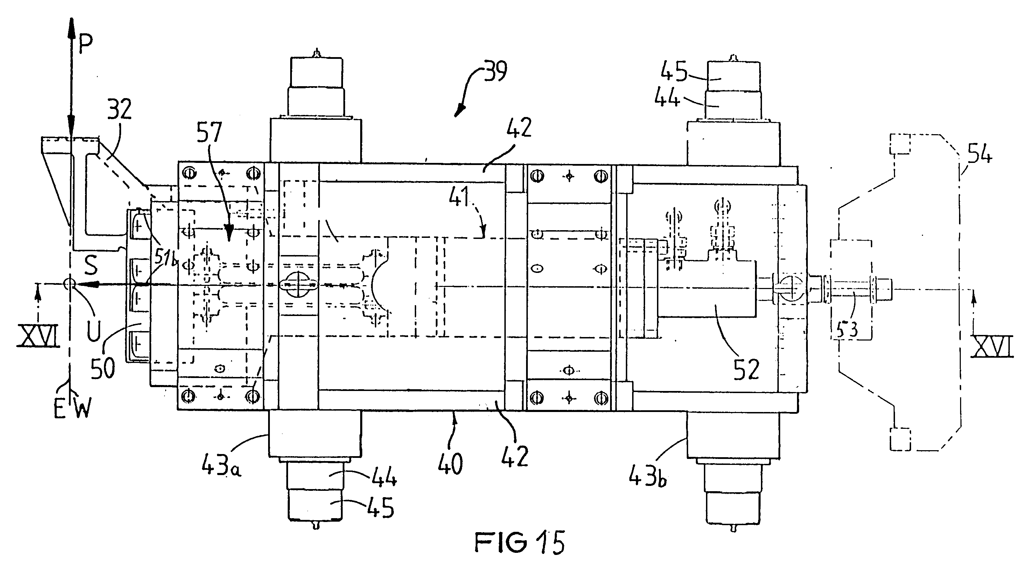

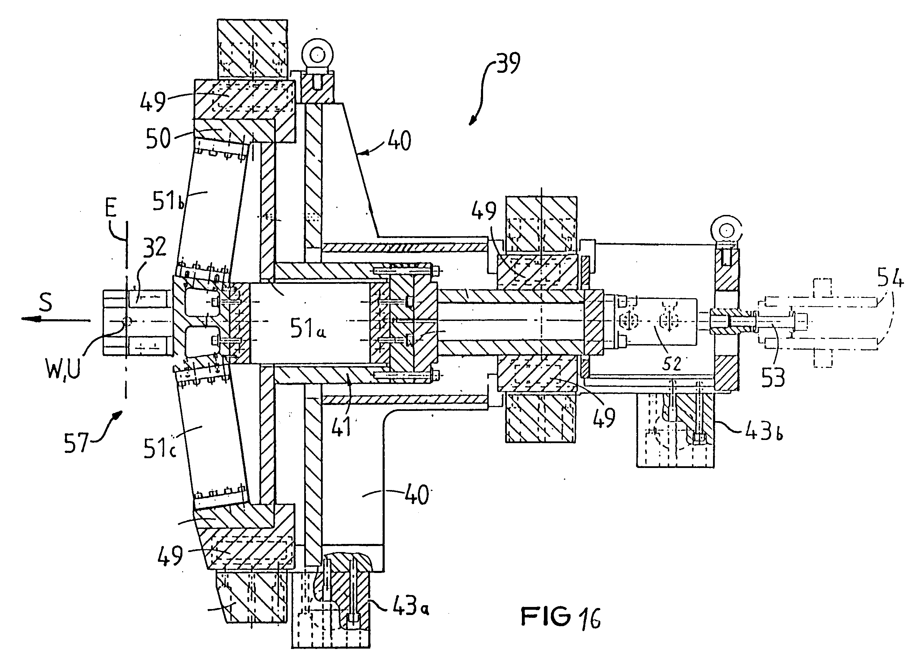

Während des ganzen Reibschweißvorganges wird die an die Scheibe anzuschweißende Schaufel 2 von der Staucheinrichtung 39 (näher in Fig. 14-16 gezeigt), mit der die Gabel 32 verbunden ist, gegen die Scheibe 1 gedrückt. Die Staucheinrichtung 39 ist zwischen den vertikalen Gehäusewänden 26a,b der Vorrichtung angeordnet und kann in seiner Lage gegenüber diesen Gehäusewänden verändert werden. Obere und untere Teile der vertikalen Gehäusewände 26a,b sind mittels hohler Querträger 31b miteinander verbunden, die rückwärts von Blech 30 und Querträger 31a beabstandet und so angeordnet sind, daß sie die Einstellung der Staucheinrichtung 39 nicht behindern.

Die Staucheinrichtung 39 besteht aus einem Stützrahmen 40 der beim Schweißen feststeht, sowie einem Schlitten 41, der am Stützrahmen 40 angebracht ist und sich beim Schweißvorgang gegenüber dem Stützrahmen 40 bewegt und dabei die Stauchbewegung ausübt. Der Stützrahmen 40 besteht aus beabstandeten, parallel angeordneten Seitenplatten 42, von denen eine jede in etwa die Form eines Hammers aufweist, wobei der "Kopf" des Hammers in vertikaler Richtung nahe der Vorderseite der Vorrichtung, in Richtung der Scheibe 1 liegt und der "Griff" des Hammers sich vom "Kopf" nach hinten erstreckt. Die Seitenplatten 42 sind steif miteinander verbunden, womit der Stützrahmen eine steife Struktur bildet. Zwei quergerichtete Stützträger 43a,b erstrecken sich unterhalb der Seitenplatten 42 und sind mit ihnen verbunden. Der vordere Träger 43a ist am unteren Ende des "Kopfes" der hammerförmigen Seitenplatten 42 angeordnet, wohingegen der hintere Träger 43b nächst der Rückseite des "Griffes" dieser hammerförmigen Platten angeordnet ist. Die Stützträger 43a,b erstrecken sich seitlich nach außen über die Seitenplatten 42 hinaus, wobei die überstehenden Endstücke eines jeden Trägers einen Positionierungsabschnitt 44 und einen Stützabschnitt 45 aufweist. Die Positionierungsabschnitte 44 erstrecken sich durch jeweils einen Gleitblock der so angebracht ist, daß er Gleiteinstellung zwischen einem zugehörigen Paar bogenförmiger Führungen 46 erlaubt.

Die Stützabschnitte sind jeweils mittels einer Befestigungseinrichtung 47 mit dem Maschinensockel 28 verschraubt.

Bei dieser Anordnung wird das Gewicht der Staucheinrichtung 39 von den Befestigungseinrichtungen 47 getragen. Die horizontale Winkellage der Staucheinrichtung 39 wird durch den Eingriff der Positionierungsabschnitte 44 in die bogenförmigen Führungen 46 bestimmt, jedoch versteht sich, daß von den Führungen kein Gewicht aufgenommen wird, da das gesamte Gewicht der Staucheinrichtung 39 von den Befestigungseinrichtungen 47 getragen wird. Auf diese Weise kann die Lage des Stützrahmens 40 der Staucheinrichtung 39 mit großer Genauigkeit eingestellt werden. Darüberhinaus wird die Lage des Stützrahmens 40 nicht durch geringfügigen Verzug der vertikalen Gehäusewände 26a,b beeinflußt, der sich infolge von darauf einwirkenden Reaktionskräften beim Betrieb der Staucheinrichtung 39 wie oben beschrieben einstellen kann.

Wenn die Winkellage der Staucheinrichtung 39 geändert werden soll, kann die Staucheinrichtung 39 als Ganzes durch ein Heißgeschirr 48 angehoben werden, das an Querträgern 31b oben an den vertikalen Gehäusewänden 26a,b aufgehängt ist. Ist die Staucheinrichtung 39 mittels des Heißgeschirrs 48 angehoben, kann die Befestigungseinrichtung 47 durch Befestigungseinrichtungen einer anderen Größe ersetzt werden. Sollte geringfügiges Nachstellen erforderlich werden, kann es durch Einsetzen von Beilegscheiben geeigneter Stärke zwischen Befestigungsplatten und Maschinensockel 28 bewirkt werden. Die bogenförmigen Führungen 46 sind so geformt, daß wenn die Lage der Staucheinrichtung 39 wie oben beschrieben eingestellt wird, die Achsen der quer angeordneten Stützträger 43 stets auf den Oberflächen gedachter Zylinder liegen, die sich konzentrisch zu einer gedachten, horizontalen, quergerichteten Schwenkachse W durch den Schweißpunkt U erstrecken. Diese Gerade steht senkrecht zur Richtung S der Stauchkraft bzw. -bewegung. Dementsprechend bewirkt jegliche Einstellung, daß die Staucheinrichtung 39 um die Schwenkachse geschwenkt wird. Desweiteren erstreckt sich die Längsachse der Staucheinrichtung durch den Schweißpunkt U, so daß bei einer Verstellung der Staucheinrichtung 39 sich der Neigungswinkel der Längsachse gegenüber der Horizontalen verändert, während die Richtung S der Stauchkraft weiterhin durch den Schweißpunkt U verläuft. In Betrieb wird die Staucheinrichtung 39 so verstellt, daß die Richtung S der Stauchkraft stets durch den Punkt U in eine Richtung geht, die senkrecht zu den aneinander anliegenden Schweißflächen 5a,b von Schaufel 2 und Scheibe 1 verläuft. Der Verlauf der bogenförmigen Führungen 46 wird vorzugsweise so gewählt, daß die Neigung der Längsach der Staucheinrichtung 39 gegenüber der Horizontalen über einen relativ großen Winkel bereich eingestellt werden kann, der vorzugsweise zwischen Null (Mittellinie horizontal) bis 25° oder sogar darüber liegt. Mittels der Positioniereinrichtung, welche die Positionierabschnitte 44, die bogenförmigen Führungen 46 und das Heißgeschirr 48 umfaßt, ist somit die Anpassung der Staucheinrichtung 39 über einen weiten Winkel bereich möglich, so daß Schaufelträger mit unterschiedlichsten Geometrieen beschaufelt werden können.

Der Schlitten 41 ist so im Stützrahmen 40 angebracht, daß Längsbewegung gegenüber dem Stützrahmen 40 möglich ist. Dazu sind zwischen Stützrahmen und Schlitten 41 Wälzlager 49 angeordnet.

An der Vorderseite des Schlittens 41 befindet sich ein steifer Schlittenkopf 50, an dessen Vorderseite die Gabel 32 befestigt ist. Der Kopf 50 ist so angebracht, daß er begrenzte horizontale Bewegung quer zum Schlitten 41 erlaubt, wofür er durch drei Sätze biegsamer Metallblätter 51a,b,c mit dem Schlitten 41 verbunden ist. Die drei Metallblätter 51a bestehen aus parallel zueinander angeordnete Lamellen mit vertikal ausgerichteten Hauptebenen. An ihren hinteren Enden sind sie fest mit dem Schlitten 41 verschraubt. Um jedoch jegliche vertikale Bewegung des Schlittenkopfes 50 gegenüber dem Schlitten 41 zu verhüten, sind zwei zusätzliche Sätze Metallblätter 51b und c vorgesehen. Der obere Satz besteht aus drei Blättern, die sich vertikal zwischen dem Schlittenkopf 50 und einem oberen Teil des Schlittens 41 erstrecken. Der untere Satz gleicht dem oberen, erstreckt sich jedoch zwischen dem Schlittenkopf 50 und einem unteren Teil des Schlittens 41. Der Schlittenkopf 50 und die Metallblätter 51 bilden gemeinsam eine Übertragungseinrichtung 57 die eine positionsgenaue Übertragung der Stauchkraft auf die Schaufel 2 gewährleistet.

An der Rückseite des Schlittens 41 ist der Zylinderteil eines Hydraulikzylinders 52 befestigt. Die Kolbenstange 53 des Zylinders 52 stützt sich über Verbindungsplatten 54 an den Gehäusewänden 26a,b ab, wobei die Verbindungsplatten 54 zum Schwenken der Staucheinrichtung 39 entlang der Hinterkanten der Gehäusewände 26a,b verschiebbar sind.

Zur Fixierung der Scheibe 1 (siehe Fig. 10 u. 11) während des Reibschweißvorganges dient eine Spanneinrichtung 55. Die Scheibe 1 ist mit vertikal stehender Achse angebracht und wird beim Schweißen dadurch in ihrer Lage gehalten, daß sie fest zwischen oberer und unterer Klemmbacke 56a,b der Spanneinrichtung 55 gehalten wird, die ein Teil der Vorrichtung darstellt. Die untere Klemmbacke 56b steht fest und die obere Klemmbacke 56a bewegt sich entlang eines vertikalen Verstellweges zwischen einer oberen Ruhestellung und einer unteren Betriebsstellung hin und her, in der sie die Scheibe 1 einspannt. Nach dem Schweißvorgang wird die obere Klemmbacke 56a angehoben, um die Scheibe 1 freizugeben, damit sie zum Anschweißen einer weiteren Schaufel 2 verstellt werden kann.

Für die erfolgreiche Herstellung eines Schaufelkranzes durch das Anschweißen von Schaufeln 2 auf diese Art ist es wesentlich, daß jede einzelne Schaufel 2 in einer gegenüber der Scheibe 1 genau festgelegten Lage angeschweißt wird. Dafür ist es notwendig, beim Schweißen die Scheibe 1 in einer gegenüber der Hubeinrichtung 8 genau festgelegten Lage zu halten und zwar derart, daß jegliche Bewegung der Scheibe 1 auf ein absolutes tolerierbares Minimum begrenzt bleibt. Die Spanneinrichtung 55 gemäß der vorliegenden Erfindung ermöglicht die Erfüllung dieser Forderungen.

Die Hubeinrichtung 8 ist mit der Spanneinrichtung 55 über die Biegeelemente 59 in Richtung P der wärmeerzeugenden Bewegung fest verbunden, wobei das in die Richtung P sich erstreckende Biegeelement 59a quer dazu biegeweich ausgebildet ist. Die obere Klemmbacke 56a ist entlang eines vorbestimmten Weges zwischen einer Betriebsstellung in der sie die Scheibe 1 mit der unteren Klemmbacke 56b verspannt und einer Neutralstellung in der sie die Scheibe freigibt gegenüber der unteren Klemmbacke 56b verfahrbar. Die Klemmbacken 56a und 56b sind mittels einer biegsamen Führung miteinander verbunden, wobei die Führung in Richtung der Klemmbewegung der Backen 56a und 56b biegeweich ausgebildet sind und die Backen 56a,b quer zur Richtung der Kelmmbewegung zumindest in Betriebsstellung unbeweglich führt. Hierzu weist die Führung die Biegeelemente 59a und 59b auf, wobei sich die Biegeelemente 59 quer zur Richtung der Klemmbewegung erstrecken und die Biegeelemente 59b, die sich quer zur Richtung als auch zu den Biegeelementen 59a erstrecken.
¹The original text has two adjacent verbs, *aufweist verbunden ist*, however *verbunden ist* has been omitted in the translation as context favours *aufweist*, the first verb used.

## Patentansprüche

1. Verfahren zur Beschaufelung eines rotationssymmetrischen Schaufelträgers (1') für Strömungsmaschinen mittels Reibschweißen, wobei am Umfang des Schaufelträgers (1') mehrere ebene Schweißflächen (5b) vorgesehen sind, welche jeweils mit einer ebenen Schweißfläche (5a) einer Schaufel (2) verschweißt werden und die zum Verbinden der Körper (1',2) notwendige Schweißtemperatur durch Zusammenpressen der Schweißfläche (5a) der Schaufel (2) mit der Schweißfläche (5b) des Schaufelträgers (1') mittels einer Stauchkraft und durch gleichzeitige translatorische Pendelbewegung der Schweißfläche (5a) der Schaufel (2) gegenüber der Schweißfläche (5b) des Schaufelträgers (1') erfolgt, dadurch gekennzeichnet, daß die Pendelbewegung in eine Richtung (P) erfolgt, die in einer im wesentlichen senkrecht zur Achse (A) des Schaufelträgers erstreckenden Ebene liegt.

2. Verfahren nach Anspruch 1, dadurch gekennzeichnet, daß die Schweißflächen (5) in zwei Verfahrensschritten miteinander verschweißt werden, wobei in einem ersten Verfahrensschritt die Körper (1',2) zusammengepreßt und gleichzeitig die Schweißflächen pendelnd aufeinander bewegt werden und in einem zweiten Verfahrensschritt nach Erreichen der notwendigen Verschweißungstemperatur die Pendelbewegung ausgesetzt wird, wobei die Stauchkraft beibehalten oder verstärkt wird.

3. Verfahren nach Anspruch 1 oder 2, dadurch gekennzeichnet, daß der Schaufelträger (1') während des Reibschweißens unbeweglich eingespannt ist und die Schaufel (2) die Pendelbewegung ausführt.

4. Verfahren nach einem der Ansprüche 1 bis 3, dadurch gekennzeichnet, daß die Stauchkraft auf eine am Schaufelfuß (4) angebrachte Auflagefläche (13) , welche der Schweißfläche (5a) der Schaufel (2) nahegelegen ist, aufgebracht wird.

5. Verfahren nach Anspruch 4, dadurch gekennzeichnet, daß Einspannkräfte zur Führung der Schaufel (2) und aus der wärmeerzeugenden Bewegung resultierende Seitenkräfte über Seitenflächen (11) des Schaufelfußes (4) auf die Schaufel (2) aufgebracht werden.

6. Verwendung einer Schaufel oder eines Schaufelrohlings zur Ausführung des Verfahrens nach einem der vorhergehenden Ansprüche, dadurch gekennzeichnet, daß der Schaufelfuß (4) an seinem vom Schaufelblatt (3) abgewandten Ende die Schweißfläche (5a) und eine Auflagefläche (13) aufweist, wobei die Auflagefläche (13) von der Schweißfläche (5a) abgewandt ist und der Schaufelfuß (4) zumindest an seinem vom Schaufelblatt (3) abgewandten Ende quaderförmig ausgebildet ist und vier ebene Seitenflächen (11) im wesentlichen senkrecht zur Ebene (E) der Schweißfläche (5a) aufweist.

7. Verwendung einer Schaufel oder eines Schaufelrohlings nach Anspruch 6, dadurch gekennzeichnet, daß der Schaufelfuß (4) eine Auflagefläche (13) aufweist, die als flanschartiger Absatz (12) ausgebildet ist und zumindest beidseits an gegenüberliegenden Längsseiten des Schaufelfußes (4) angeformt ist.

8. Aufnahmeeinrichtung für Reibschweißgeräte zur Beschaufelung von Schaufelträgem (1') mit zwei axial gegeneinander verspannbaren Spannbacken (16a, b) zur Fixierung einer Schaufel (2), die jeweils zwei im Winkel zueinander stehende Spannflächen (18) aufweist, welche schräg zur Spannachse (Q) der Spannbacken (16a, b) stehen, wobei die Spannbacken (16a, b) jeweils mit einer Auflagefläche (22) versehen sind, welche sich senkrecht zu den anschließenden Spannflächen (18) erstrecken und bei eingespannter Schaufel (2) mit Auflagefläche (13) des Schaufelfußes (4) zur Anlage kommen.

9. Aufnahmeeinrichtung nach Anspruch 8, dadurch gekennzeichnet, daß die Spannbacken (16a, b) jeweils an ihrer, den Spannflächen (18) abgewandten Seite eine schaufelblattähnliche Aussparung (17a bzw. 17c) zur Beabstandung benachbarter, am Schaufelträger (1') angeschweißter Schaufeln (2) aufweisen.

10. Vorrichtung zur Durchführung eines Reibschweißverfahrens, bei welchem ebene Schweißflächen (5) zweier zu verbindender Körper (1 und 2) mittels einer Stauchkraft senkrecht zur Ebene der aneinanderliegenden Schweißflächen (5) aneinander gedrückt werden und ein erster Körper (2) zur Erzeugung von Reibungswärme in den Schweißflächen (5) gegenüber dem anderen Körper (1) geradlinig, oszillierend bewegbar ist, wobei die Bewegung (P) senkrecht zur Richtung (S) der Stauchkraft erfolgt, wobei die beiden Schweißflächen (5a,b) der Körper (2 bzw. 1) mittels einer Spann(55) bzw. einer Aufnahmeeinrichtung (10) in einer Ebene (E) , welche sich senkrecht zur Richtung (S) der durch eine Staucheinrichtung (39) erzeugbaren Stauchkraft erstreckt, festlegbar sind und die Staucheinrichtung (39) um eine raumfeste, in der Ebene (E) liegende, gedachte Schwenkachse (W) schwenkbar in der Vorrichtung angeordnet ist, und die mit der Staucheinrichtung (39) stauchkraftübertragend verbundene Aufnahmeeinrichtung mittels einer Hubeinrichtung (8) zur Erzeugung der Reibungswärme oszillierend bewegbar ist.

11. Vorrichtung nach Anspruch 10 dadurch gekennzeichnet, daß die Hubeinrichtung (8) eine parallel zur Schwenkachse (W) gerichtete, geradlinige Bewegung (P) erzeugt.

12. Vorrichtung nach Anspruch 10 oder 11 dadurch gekennzeichnet, daß die Staucheinrichtung (39) eine Übertragungseinrichtung (57) aufweist, welche die Stauchkraft auf die Aufnahmeeinrichtung (10) bei beweglicher Führung in Richtung (P) der wärmeerzeugenden Bewegung überträgt, wobei die Aufnahmeeinrichtung (10) quer zur wärmeerzeugenden Bewegung (P) und quer zur Richtung (S) der Stauchkraft mit der Übertragungseinrichtung (57) steif verbunden ist.

13. Vorrichtung nach einem der Ansprüche 10 bis 12 dadurch gekennzeichnet, daß die Staucheinrichtung (39) einen Stützrahmen (40) und zusätzlich zur Übertragungseinrichtung (57) einen stauchkrafterzeugenden Hydraulikzylinder (52) umfaßt, wobei die mit dem Hydraulikzylinder kraftübertragend verbundene Übertragungseinrichtung (57) im Stützrahmen (40) in Richtung (S) der Stauchkraft beweglich gelagert ist und der Stützrahmen (40) schwenkbar um die Schwenkachse W gelagert und für den Schweißvorgang gegenüber dem feststehenden Körper (1) festlegbar ist.

14. Vorrichtung nach Anspruch 13 dadurch gekennzeichnet, daß sich der Hydraulikzylinder (52) oder seine Kolbenstange (53) an den Gehäusewänden (26a,b) der Vorrichtung abstützt und zur Ausführung der Schwenkbewegung der Staucheinrichtung (39) beweglich an den Gehäusewänden (26a,b) geführt ist.

15. Vorrichtung nach einem der Ansprüche 12 bis 14 dadurch gekennzeichnet, daß die Übertragungseinrichtung (57) mindestens ein Biegeelement (51) aufweist verbunden ist, welches in Richtung (P) der wärmeerzeugenden Bewegung biegeweich und quer dazu biegesteif ausgebildet ist und mit der Aufnahmeeinrichtung (10) verbunden ist.

16. Vorrichtung nach einem der Ansprüche 10 bis 15, dadurch gekennzeichnet, daß die Vorrichtung eine Positioniereinrichtung aufweist, welche die Staucheinrichtung (39) zur Durchführung der Schwenkbewegung auf einer zur Schwenkachse (W) konzentrischen Bahn führt, sowie Mittel zur Befestigung der Staucheinrichtung (39) in der gewählten Position.

17. Vorrichtung nach einem der Ansprüche 10 bis 16, dadurch gekennzeichnet, daß die Aufnahmeeinrichtung (10) mit der ortsfesten Hubeinrichtung (8) über eine koaxial zur Schwenkachse (W) verdrehbare Kupplung (58) verbunden ist.

18. Vorrichtung nach einem der Ansprüche 10 bis 17, dadurch gekennzeichnet, daß die Aufnahmeeinrichtung (10) mit der Hubeinrichtung (8) über ein in Richtung (S) der Stauchkraft biegeelastisch ausgebildetes Verbindungselement (9) zur Übertragung der wärmeerzeugenden Bewegung (P) verbunden ist.

19. Vorrichtung nach einem der Ansprüche 10 bis 18, dadurch gekennzeichnet, daß die Hubeinrichtung (8) mit der Spanneinrichtung (55) über mindestens ein Biegeelement (59a) in Richtung (P) der wärmeerzeugenden Bewegung unbeweglich verbunden ist, wobei das in die Richtung (P) sich erstreckende Biegeelement (59a) quer dazu biegeweich ausgebildet ist.

20. Vorrichtung nach einem der Ansprüche 10 bis 19, dadurch gekennzeichnet, daß die Spanneinrichtung (55) Klemmbacken (56a,b) aufweist, die entlang eines vorbestimmten Weges zwischen einer Betriebsstellung, in der sie den feststehenden Körper (1) zwischen sich verspannen und einer Neutralstellung in der sie den feststehenden Körper (1) freigeben relativ zueinander verfahrbar sind, und die Klemmbacken (56a,b) mittels einer biegsamen Führung miteinander verbunden sind, wobei die Führung in Richtung der Relativbewegung der Backen (56a,b) biegeweich ausgebildet sind und die Backen (56a,b,) quer zur Richtung der Klemmbewegung zumindest in Betriebsstellung der Backen (56a,b) unbeweglich führt.

21. Vorrichtung nach Anspruch 20, dadurch gekennzeichnet, daß die Führung mindestens zwei Biegeelemente (59a,b) aufweist, wobei sich ein erstes Biegeelement (59a) quer zur Richtung der Klemmbewegung erstreckt und ein zweites Biegeelement (59b) , welches sich quer zur Richtung als auch zum ersten Biegeelement (59a) erstreckt.

22. Vorrichtung nach Anspruch 21, dadurch gekennzeichnet, daß die Führung jeweils mehrere erste und zweite Biegeelemente (59a,b) aufweist, welche parallel zueinander verlaufen.

## Claims

1. A process for blading a rotationally symmetrical blade carrier (1') for fluid flow machines by means of friction welding, wherein several flat welding surfaces (5b) are provided on the periphery of the blade carrier (1') and are welded to a flat welding surface (5a) of a respective blade (2), and the welding temperature required for connecting the parts (1'2) is attained by pressing the welding surface (5a) of the blade (2) to the welding surface (5b) of the blade carrier (1') by means of a compacting force and by simultaneous translational oscillating movement of the welding surface (5a) of the blade (2) in relation to the welding surface (5b) of the blade carrier (1'), **characterised in that** the oscillating movement is performed in one direction (P) situated in a plane extending substantially perpendicular to the axis (A) of the blade carrier.

2. A process according to Claim 1, **characterised in that** the welding surfaces (5) are welded to each other in two stages of the process, wherein the parts (1', 2) are pressed together in a first stage and at the same time the welding surfaces are oscillated towards each other and the oscillating movement is discontinued in a second stage on attaining the required welding temperature, the compacting force being maintained or increased.

3. A process according to Claims 1 or 2, **characterised in that** the blade carrier (1') is immovably clamped during friction welding and the blade (2) performs the oscillating movement.

4. A process according to any one of Claims 1 to 3, **characterised in that** the compacting force is applied to a contact surface (13) adjacent the welding surface (5a) of the blade (2) and attached to the foot (4) of the blade.

5. A process according to Claim 4, **characterised in that** the clamping forces for guiding the blade (2) and side forces resulting from the heat generating movement are applied to the blade (2) via side surfaces (11) of the blade foot (4).

6. Use of a blade or a blade blank for performing the process according to one of the preceding claims, **characterised in that** the foot (4) of the blade has the welding surface (5a) and a contact surface (13) at its end facing away from the blade sheet (3), wherein the contact surface (13) faces away from the welding surface (5a) and the foot (4) of the blade is square in shape at least at the end thereof facing away from the blade sheet (3) and has four flat side surfaces (11) substantially perpendicular to the surface (E) of the welding surface (5a).

7. Use of a blade or a blade blank according to Claim 6, **characterised in that** the foot (4) of the blade has a contact surface (13) in the form of a flange-like shoulder (12) and formed integrally at least on two sides with opposing longitudinal sides of the foot (4) of the blade.

8. A receiving device for friction welding apparatus for the purpose of blading blade carriers (1') having two gripping jaws (16a, b) mountable axially against each other for attaching a blade (2) having two gripping surfaces (18) at an angle to each other respectively and inclined to the gripping axis (Q) of the gripping jaws (16a, b), wherein the respective gripping jaws (16a, b) are provided with a contact surface (22) extending perpendicular to the adjacent gripping surfaces (18) and coining to rest when the blade (2) having a contact surface (13) of the foot (4) of the blade is clamped.

9. A receiving device according to Claim 8, **characterised in that** that side of the respective gripping jaws (16a, b) which faces away from the gripping surfaces (18) has a vane-like recess (17a and 17c respectively) for holding adjacent blades (2) welded to the blade carrier (1').

10. A device for performing a friction welding process, during which process flat welding surfaces (5) of two parts (1 and 2) to be connected are pressed to each other by means of a compacting force perpendicular to the plane of the welding surfaces (5) lying together, and a first part (2) for generating frictional heat in the welding surfaces (5) is movable oscillating in a straight line in relation to the other part (1), wherein the movement (P) occurs perpendicular to the direction (S) of the compacting force, the two welding surfaces (5a, b) of the part (2 and 1 respectively) are fixed by means of a gripping device (55) or a receiving device (10) in a plane (E) extending perpendicular to the direction (S) of the compacting force produceable by a compacting device (39), and the compacting device (39) is arranged in the device and is rotatable about a spatial imaginary axis of rotation (W) situated in the plane (E), and the receiving device connected to the compacting means (39) transmitting the compacting force is movable in an oscillating manner by means of a lifting means (8) for generating frictional heat.

11. A device according to Claim 10, **characterised in that** the lifting means (8) produces a linear movement (P) directed parallel to the axis of rotation (W).

12. A device according to Claim 10 or 11, **characterised in that** the compacting means (39) has transmitting means (57) transmitting the compacting force to the receiving means (10) when there is movable control in the direction (P) of the heat generating movement, wherein the receiving means (10) is rigidly connected to the transmitting means (57) at right angles to the heat generating movement (P) and at right angles to the direction (S) of the compacting force.

13. A device according to any one of the Claims 10 to 12, **characterised in that** the compacting means (39) comprises a support frame (40) and in addition to the transmitting means (57) a hydraulic cylinder (52) producing the compacting force, wherein the transmitting means (57) connected to transmit the force to the hydraulic cylinder is displaceably supported in the support frame (40) in the direction (S) of the compacting force and the support fame (4) is rotatably mounted about the axis of rotation W and is fixed for the welding process in relation to the stationary part (1).

14. A device according to Claim 13, **characterised in that** the hydraulic cylinder (52) or its piston rod (53) are supported on the housing walls (26a, b) of the device and are displaceably guided on the housing walls (26a, b) to perform the rotating movement of the compacting means (39).

15. A device according to any one of Claims 12 to 14, **characterised in that** the transmitting means (57) has¹ at least one bending member (51) easy to bend in the direction (P) of the heat generating movement and difficult to bend at right angles thereto, and connected to the receiving means (10).

16. A device according to any one of Claims 10 to 15, **characterised in that** the device has a positioning means controlling the compacting means (39) to perform the rotating movement on a path concentric with the axis of rotation (W), and means for fastening the compacting means (39) in the selected position.

17. A device according to any one of Claims 10 to 16, **characterised in that** the receiving means (10) is connected to the stationary lifting means (8) via a coupling member (58) rotatable coaxially with the axis of rotation (W).

18. A device according to any one of Claims 10 to 17, **characterised in that** the receiving means (10) is connected to the lifting means (8) via a connecting member (9) resilient to bending in the direction (S) of the compacting force, which connecting member transmits the heat generating movement (P).

19. A device according to any one of Claims 10 to 18, **characterised in that** the lifting means (8) is immovably connected to the gripping means (55) via at least one bending member (59a) in the direction (P) of the heat generating movement, wherein the bending member (59a) extending in the direction (P) is easy to bend at right angles thereto.

20. A device according to any one of Claims 10 to 19, **characterised in that** the gripping means (55) has clamping jaws (56a, b) displaceable in relation to each other along a predetermined path between an operational position, in which they mount the stationary part (1) therebetween, and a neutral position in which they release the stationary part (1), and the clamping jaws (56a, b) are connected to each other by means of a flexible guide, wherein the guide is easy to bend in the direction of relative movement of the jaws (56a, b) and immovably controls the jaws (56a, b) at right angles to the direction of the clamping movement at least in the operational position of the jaws (56a, b).

21. A device according to Claim 20, **characterised in that** the guide has at least two bending members (59a, b), wherein a first bending member (59a) extends at right angles to the direction of the clamping movement and a second bending member (59b) extends at right angles to the said direction as well as to the first bending member (59a).

22. A device according to Claim 21, **characterised in that** the guide has several first and second bending members (59a, b) respectively extending parallel to each other.

## Revendications

1. Procédé pour mettre en place des aubes sur un support d'aubes (1) présentant une symétrie de rotation dans des machines à fluide, en procédant par soudage par friction, la périphérie du support d'aubes (1) comportant plusieurs surfaces planes de soudage (5b) que l'on soude chacune avec une surface de soudage (5a) également plane d'une aube (2), et la température de soudage nécessaire à relier les corps (1, 2) est obtenue par compression de la surface de soudage (5a) de l'aube (2) et de la surface de soudage (5b) du support d'aube (1), par l'intermédiaire d'une force de compression et en effectuant en même temps un mouvement oscillant de translation de la surface de soudage (5a) de l'aube (2) par rapport à la surface de soudage (5b) du support d'aubes (1), caractérisé en ce que le mouvement oscillant se fait dans une direction (P) qui est située dans un plan essentiellement perpendiculaire à l'axe (A) du support d'aubes.

2. Procédé selon la revendication 1, caractérisé en ce que les surfaces de soudage (5) sont reliées par soudure dans deux étapes de procédé : au cours d'une première étape du procédé, le corps (1) est comprimé et en même temps les surfaces de soudage sont déplacées l'une par rapport à l'autre de manière pendulaire, et au cours d'une seconde étape du procédé, une fois que l'on atteint la température de soudure par friction, nécessaire, on arrête le mouvement pendulaire et on conserve et on augmente la force de compression.

3. Procédé selon la revendication 1 ou 2, caractérisé en ce que le support d'aubes (1) est serré de manière immobile pendant le soudage par friction tandis que l'aube (2) exécute un mouvement pendulaire.

4. Procédé selon l'une des revendications 1 à 3, caractérisé en ce que la force de compression est appliquée sur une surface d'appui (13) prévue sur un pied d'aube (4), cette surface étant voisine de la surface de soudage (5a) de l'aube (2).

5. Procédé selon la revendication 4, caractérisé en ce que les forces de serrage pour guider l'aube (2) et les forces latérales résultant du mouvement générant la chaleur, sont appliquées à l'aube (2) par les surfaces latérales (11) du pied (4) de l'aube.

6. Application d'une aube ou d'une ébauche d'aube pour exécuter le procédé selon l'une quelconque des revendications précédentes, caractérisée en ce que le pied (4) de l'aube comporte, à son extrémité opposée à celle de la lame (3), la surface de soudage (5a) et une surface d'appui (13), cette surface d'appui (13) étant opposée à la surface de soudage (5a), et le pied (4) de l'aube est de forme carrée au moins au niveau de son extrémité opposée à la lame (3), et comporte quatre surfaces latérales planes (11) essentiellement perpendiculaires au plan (E) de la surface de soudage (5a).

7. Application d'une aube ou d'une ébauche d'aube selon la revendication 6, caractérisée en ce que le pied (4) de l'aube comporte une surface d'appui (13) réalisée comme épaulement (12) en forme de bride et qui est prévue au moins des deux côtés, contre des grands côtés opposés du pied (4) de l'aube.

8. Installation de réception pour appareil de soudage par friction pour monter des aubes sur des supports d'aube (1), comprenant deux mors (16a, 16b) susceptibles d'être serrés axialement l'un contre l'autre pour bloquer une aube (2), ces mors ayant des surfaces de serrage (18) respectivement à l'angle, sont disposées en biais par rapport à l'axe de serrage (Q) des mors (16a, 16b), les mors (16a, 16b) étant respectivement munis d'une surface d'appui (22) qui s'étend perpendiculairement jusque contre la surface de serrage (18) adjacente et qui, lorsque l'aube (2) est serrée, viennent en appui avec des surfaces d'appui (13) du pied (4) de l'aube.

9. Installation de réception selon la revendication 8, caractérisée en ce que les mors (16a, 16b) ont sur leurs côtés respectifs, opposés aux surfaces de serrage (18), une cavité (17a, 17c), analogue à une lame d'aube pour maintenir écartées les aubes (2) soudées sur le support d'aubes (1').

10. Dispositif pour la mise en oeuvre d'un procédé de soudage par friction selon lequel on presse l'une contre l'autre des surfaces de soudage (5) planes de deux corps (1, 2) à relier, par une force de compression exercée perpendiculairement au plan des surfaces de soudage (5) juxtaposées, et un premier corps (2) est déplacé suivant un mouvement oscillant rectiligne par rapport à l'autre corps (1) pour créer une chaleur de friction dans les surfaces de soudage (5), le mouvement (P) étant perpendiculaire à la direction (S) de la force de compression, les surfaces de soudage (5a, 5b) des corps (2, 1) pouvant être bloquées par une installation de serrage (55) ou de réception (10) dans un plan (E) perpendiculaire à une direction (S) de la force de compression créée par l'installation de compression (39), et l'installation de compression (39) est prévue autour d'un axe de basculement (W) imaginaire, situé dans le plan (E), pour faire pivoter le dispositif, et en ce que l'installation de réception, reliée à l'installation de compression (39) de manière à transmettre la force de compression, peut être déplacée par une installation de déplacement (8) suivant un mouvement oscillant pour créer la chaleur par friction.

11. Dispositif selon la revendication 10, caractérisé en ce que l'installation de déplacement (8) crée un mouvement (P) rectiligne, dirigé parallèlement à l'axe de basculement (W).

12. Dispositif selon les revendications 10 ou 11, caractérisé en ce que l'installation de compression (39) comporte une installation de transmission (57) qui transmet la force de compression à l'installation de réception (10) pour un guidage mobile dans la direction (P) du mouvement qui crée la chaleur, l'installation de réception (10) étant reliée rigidement à l'installation de transmission (57) transversalement au mouvement créant la chaleur (P) et transversalement à la direction (S) de la force de compression.

13. Dispositif selon l'une des revendications 10 à 12, caractérisé en ce que l'installation de compression (39) comprend un châssis (40) et, en plus, pour l'installation de transmission (57), un vérin hydraulique (52) créant la force de compression ; l'installation de transmission (57) reliée par une liaison de transmission de force avec le vérin hydraulique est montée mobile dans le châssis (40) dans la direction (S) de la force de compression et le châssis (40) est monté pivotant autour de l'axe de basculement (W) et permet de fixer l'opération de soudage par rapport au corps fixe (1).

14. Dispositif selon la revendication 13, caractérisé en ce que le vérin hydraulique (52) ou sa tige de piston (53) s'appuient contre les parois de boîtier (26a, 26b) du dispositif et sont guidés de manière mobile contre les parois de boîtier (26a, 26b) pour effectuer le mouvement de pivotement de l'installation de compression (39).

15. Dispositif selon l'une des revendications 12 à 14, caractérisé en ce que l'installation de transmission (57), munie d'au moins un élément de flexion (51) qui fléchit dans la direction (P) du mouvement générant la chaleur, est rigide en flexion transversalement à cette direction, et elle est reliée à l'installation de réception (10).

16. Dispositif selon l'une des revendications 10 à 15, caractérisé en ce qu'il comprend une installation de positionnement qui conduit l'installation de compression (39) pour la mise en oeuvre du mouvement de basculement sur un chemin concentrique à l'axe de basculement (W) ainsi que des moyens pour fixer l'installation de compression (59) dans la position choisie.

17. Dispositif selon l'une des revendications 10 à 16, caractérisé en ce que l'installation de réception (10) est reliée à l'installation de déplacement (8), montée fixe, par l'intermédiaire d'un embrayage (58) susceptible de tourner coaxialement à l'axe de basculement (W).

18. Dispositif selon l'une des revendications 10 à 17, caractérisé en ce que l'installation de réception (10) est reliée à l'installation de déplacement (8) par un élément de liaison (9) élastique en flexion dans la direction (S) de la force de compression, pour transmettre le mouvement (P) générant la chaleur.

19. Dispositif selon l'une des revendications 10 à 18, caractérisé en ce que l'installation de déplacement (8) est reliée de manière fixe par au moins un élément de flexion (59a) dans la direction (P) du mouvement générant la chaleur, et l'élément de flexion (59a) qui s'étend dans la direction (P) est souple en flexion, transversalement à cette direction.

20. Dispositif selon l'une des revendications 10 à 19, caractérisé en ce que l'installation de serrage (55) comporte des mors (56a, 56b) qui peuvent être déplacés librement l'un par rapport à l'autre le long d'un chemin prédéterminé entre une position de fonctionnement dans laquelle il serre les corps à insérer entre eux, et une position neutre dans laquelle ils peuvent rapprocher de manière relative les corps fixes (1), libérés, et les mors (56a, 56b) sont reliés l'un à l'autre par un moyen de guidage souple, le moyen de guidage pouvant s'esquiver d'une manière élastique souple en direction du mouvement relatif des mors (56a, 56b) et les mors (56a, 56b) sont guidés de manière immobile dans la direction du mouvement de pincement du moins dans la position de fonctionnement des mors (56a, 56b).

21. Dispositif selon la revendication 20, caractérisé en ce que le moyen de guidage comporte au moins deux éléments de flexion (59a, 59b), un premier élément de flexion (59a) s'étendant transversalement à la direction du mouvement de pincement et un second élément de flexion (59b) s'étendant transversalement à la direction et par rapport au premier élément de flexion (59a).

22. Dispositif selon la revendication 21, caractérisé en ce que le moyen de guidage comprend chaque fois plusieurs premiers et seconds éléments de flexion (59a, 59b) qui sont parallèles.
